## Europäisches Patentamt

## European Patent Office

## Office européen des brevets

(19)

(11) Veröffentlichungsnummer: **0 065 489**
**A1**

# EUROPÄISCHE PATENTANMELDUNG

(21) Anmeldenummer: **82810215.2**

(22) Anmeldetag: **19.05.82**

(51) Int. Cl.³: **C 02 F 1/48**

(30) Priorität: **20.05.81 DD 230095**

(43) Veröffentlichungstag der Anmeldung: **24.11.82**
**Patentblatt 82/47**

(84) Benannte Vertragsstaaten: **AT CH DE FR GB IT LI NL SE**

(71) Anmelder: **Jenoptik Jena G.m.b.H., Carl-Zeiss-Strasse 1, DDR-6900 Jena (DD)**

(84) Benannte Vertragsstaaten: **DE**

(71) Anmelder: **VEB Carl Zeiss Jena, Carl-Zeiss-Strasse 1, DDR-6900 Jena (DD)**

(84) Benannte Vertragsstaaten: **CH FR GB IT LI NL SE AT**

(72) Erfinder: **Kohl, Dieter, Jansonstrasse 22, DDR-6900 Jena (DD)**
Erfinder: **Schilling, Hans-Joachim, Judith-Auer-Strasse 27, DDR-6902 Jena-Neulobeda (DD)**

(74) Vertreter: **Bovard, Fritz Albert et al, Bovard & Cie Patentanwälte VSP Optingenstrasse 16, CH-3000 Bern 25 (CH)**

(54) **Anordnung zur Veränderung der Salzkonzentration von Flüssigkeiten.**

(57) Bei einer Anordnung zur Veränderung der Salzkonzentration von Flüssigkeiten sollen die Wirtschaftlichkeit, die Anwendungsbreite und die Auswirkungen auf die Umweltbedingungen erhöht werden. Aus diesem Grunde ist mit möglichst einfachen Mitteln ohne Ionenaustausch eine energiesparende, umweltschonende und technisch gut beherrschbare Anordnung zur Änderung der Salzkonzentration von Flüssigkeiten in grossen Konzentrationsbereichen zu schaffen. Erfindungsgemäss wird durch die gleichzeitige Einwirkung eines stationären elektrischen und eines stationären magnetischen Feldes auf die Flüssigkeit eine Ionenbewegung unter Verhinderung von Ionenkombinationen hervorgerufen. Eine gezielte Ionenbewegung führt zu lokalen Zonen unterschiedlicher Ionenkonzentration und -polarität, aus denen die Flüssigkeitsvolumina entnehmbar sind.

- 1 -

Anordnung zur Veränderung der Salzkonzentration von Flüssigkeiten

Die Erfindung betrifft eine Anordnung zur Veränderung der Salzkonzentration von Flüssigkeiten mit einer großen Anwendungsbreite zur elektrophysikalischen Aufbereitung von Flüssigkeiten, angefangen von der Reinigung (Entsalzung) der Flüssigkeiten bis zur Rohstoffgewinnung (Salzgewinnung). Besondere gesellschaftliche Bedeutung erlangt diese Aufbereitung für den Umweltschutz (z.B. Abwasserbehandlung und Salzrückgewinnung). Ein weiterer Entwicklungsschwerpunkt ist die Trinkwasser- und Rohstoffgewinnung insbesondere aus Meerwasser.

Es ist seit langem prinzipiell bekannt, die Salzkonzentration von Lösungen durch Verdünnen zu verändern. Dabei ist die Zuführung von reinem bzw. salzarmen Wasser notwendig. Abgesehen davon, daß z.B. in der Abwassertechnik wasserwirtschaftliche Grenzwerte eingehalten werden können, sich aber an der Gesamtbelastung der Gewässer mit Salzen nichts ändert, wirken sich die in letzter Zeit gestiegenen Kosten für das zuzuführende reine Wasser und die Kosten für das volumenmäßig vergrößerte Abwasser doch auf das Gesamtverfahren aus. Es ist auch prinzipiell bekannt, salzhaltige Flüssigkeiten einzudampfen, um die Salzkonzentration zu erhöhen, bzw. um Salze aus Lösungen zu gewinnen. Die zur Verdampfung des Lösungsmittels zuzuführende Energie ist hoch und großtechnische Anlagen sind daher kaum wirtschaftlich. Bekannt sind auch Elektrolyseverfahren, bei denen unter Zufuhr von elektrischer

- 2 -

Energie an den Elektroden (Anode und Katode) eine chemische Reaktion der gelösten Stoffe erzwungen wird.

An der Anode findet eine Oxidation der entsprechenden Ionen, an der Katode eine Reduktion der Ionen statt. In der Elektrolysezelle können nur abscheidbare Kationen (Metalle) und Anionen, die in ihrer oxidierten Form aus den Gleichgewichtsreaktionen entfernt werden (Zyanid, Chlorid ...) in ihrer Konzentration verändert werden. Die Konzentration der Ionen ist, bis auf eine Häufung an der Elektrodenoberfläche, die praktisch nicht ausnutzbar ist ( 0,1 mm) aufgrund der Elektroneutralitätsbedingung an jedem Ort des Elektrolysegefäßes gleich groß. Im praktischen Betrieb genügt das Elektrolyseverfahren selten den gestellten wasserwirtschaftlichen Einleitungsbedingungen für Abwässer, da sich bei der Elektrolyse gering konzentrierter Metallsalze der energetische Wirkungsgrad verschlechtert.

Vom Anwendungsgebiet her weit verbreitet ist das Verfahren (Hartinger, "Taschenbuch der Abwasserbehandlung") mittels Ionenaustausch bestimmte Ionen anzureichern. Durch Regenerieren der Austauschermaterialien erhält man in den Eluaten die Ionen in erheblich größeren Konzentrationen. Eine chemische Weiterbehandlung der Regenerate bis zum Erhalt der gewünschten Salze ist zumeist notwendig.

Um die Ionenaustauscher wieder zu aktivieren, müssen Säuren, Laugen oder Salze im Überschuß eingesetzt werden. Mit derartigen Anlagen kann letztenendes eine Aufsalzung der Gewässer nicht vermieden werden; im Gegenteil, durch die Regeneriermittelüberschüsse und die nachfolgend notwendigen Neutralisationen wird die Salzlast höher, als sie im eigentlichen Abwasser vorher war.

Mit Ionenaustauschern können die wasserwirtschaftlichen Forderungen, speziell für die zum Austausch verwendeten Ionen ($Cl^-$) nicht eingehalten werden.

Außerdem sind sie kostenaufwendig in bezug auf Investitionen, Energieverbrauch, Chemikalien und Wartung.

Darüber hinaus sind Membranverfahren, wie Ultrafiltration, umgekehrte Osmose und Elektrodialyse bekannt.

- 3 -

Bei den Verfahren der umgekehrten Osmose (z.B. DE-OS 2553 416) wird ein Druck auf eine Salzlösung, die durch eine semipermeable Wand von einer reinen Lösung getrennt ist, ausgeübt, so daß Lösungsmittel aus der Salzlösung in die reine Lösung diffundiert. Die Salzlösung wird aufkonzentriert.

Nachteilig sind die hohen Arbeitsdrücke (20 .... 150 bar), die schwierige strömungsmechanische Führung der Lösung und die Verwendung von Membranen, wodurch das Verfahren aufwendig wird. Membranen verschleißen und erfordern die Einhaltung definierter Arbeitsbedingungen. Eine Aufkonzentrierung auf mehr als 10 %ige Salzlösung ist extrem unwirtschaftlich. Ferner tritt generell ein sog. Salzschlupf auf.

Beim Elektrodialyseverfahren (z.B. DE-OS 2621 590) wird mittels einer semipermeablen Wand eine Trennung zwischen geladenen Ionen und anderen großen Molekülen bewirkt.

Nachteilig ist auch hier, wie bei allen Membranverfahren, die Verwendung einer Membran mit den bereits genannten Eigenschaften. Weiterhin arbeitet dieses Verfahren nur bei einer hohen Konzentrationsdifferenz zwischen Lösung und der Konzentration dieser Ionen als sog "Festionen" im Austauschermaterial.

Das Verfahren ist insofern nur für verdünnte Lösungen geeignet. Wegen der Rückdiffusion sind nur geringe Konzentrationsgefälle erreichbar.

Die Verbesserung der Anwendungsmöglichkeiten der Membranverfahren ist Schwerpunkt der Forschung. Fortschritte wurden bereits durch synthetische organische Ionenaustauschermembranen erzielt, die jeweils nur Kationen oder Anionen diffundieren lassen, wodurch entweder ein Aufsalzen oder Entsalzen von Lösungen möglich ist. Ein Beispiel für die Membranentwicklung ist aus der DE-OS 2623 351 ersichtlich.

Die Membranverbesserungen bringen zwar schrittweise Anwendungsvorteile, können aber die der Membrantechnik eigenen Nachteile, insbesondere die Unwirtschaftlichkeit, nicht beseitigen.

Ziel der Erfindung ist die Verringerung des Investitions-, Wartungs- und Energieaufwandes sowie die Verbesserung der Umweltbedingungen und Erhöhung der Anwendungsbreite.

Der Erfindung liegt die Aufgabe zugrunde, mit möglichst einfachen Mitteln ohne Ionenaustausch, ohne Membran und ohne zusätzlich reine Flüssigkeit zuzuführen bzw. energiereich abzuführen eine technisch gut beherrschbare und wirtschaftliche Anordnung zur Änderung der Salzkonzentrationen von Flüssigkeiten in großen Konzentrationsbereichen zu schaffen.

Diese Aufgabe wird bei einer Anordnung zur Veränderung der Salzkonzentrationen von Flüssigkeiten erfindungsgemäß dadurch gelöst, daß die Flüssigkeit gleichzeitig und gleichräumig einem stationären magnetischen und einem stationären elektrischen Feld ungleicher Feldlinienrichtungen ausgesetzt ist und daß in der Flüssigkeit Strömungsbarrieren gegen die Bewegungsrichtung der Ionen angeordnet sind.

Es ist vorteilhaft, wenn die Komponenten der Richtungen der Vektoren des magnetischen und elektrischen Feldes senkrecht aufeinander stehen.

Desweiteren sind ein Zufluß der zu behandelnden Flüssigkeit, vorzugsweise in einem Volumenbereich der Flüssigkeit, welcher der Wirkung des elektrischen und des magnetischen Feldes ausgesetzt ist, wobei der Zufluß in einer von der durch die Einwirkung des magnetischen und des elektrischen Feldes hervorgerufenen Bewegungsrichtung der Ionen der Flüssigkeit abweichenden Richtung erfolgt, sowie voneinander getrennte Ablüsse in den jeweils unterschiedlichen Konzentrations- und unterschiedlichen Ionenpolaritätsbereichen der Flüssigkeit, vorteilhaft.

Von Vorteil ist außerdem, wenn die getrennten Abflüsse aus den unterschiedlichen Ionenpolaritätsbereichen der Flüssigkeit in einem Gefäß zusammengeführt sind, das vorzugsweise im thermischen Kontakt zu der zu behandelnden Flüssigkeit steht.

- 5 -

Darüber hinaus ist es vorteilhaft, wenn jeweils einer oder mehrere Abflüsse aus einem der Konzentrationsbereiche der Flüssigkeit erneut ein- oder mehrfach jeweils demselben oder jeweils einem anderen elektrischen und magnetischen Feld ausgesetzt sind.

Erfindungsgemäß wird die Flüssigkeit den gleichzeitigen und gleichräumigen Einwirkungen eines stationären elektrischen und einem stationären magnetischen Feldes ausgesetzt. Die beiden Felder stehen dabei in den Komponenten der Richtung ihrer Vektoren vorzugsweise senkrecht aufeinander. Durch die Feldereinwirkungen wird eine Ionenbewegung der Flüssigkeit hervorgerufen. Strömungsbarrieren in Richtung dieser Ionenbewegung verhindern eine Bewegung der Flüssigkeit in dieser Richtung, so daß die Ionen während ihrer Bewegung nicht untereinander rekombinieren können. Auf diese Art und Weise bilden sich aufgrund der gezielten Ionenbewegung relativ zur Flüssigkeit in der Flüssigkeit lokale Zonen unterschiedlicher Ionenkonzentration und -polarität, aus denen über geeignete Abflüsse die Flüssigkeit mit den entsprechenden Ionenkonzentrationen und -polaritäten entnommen werden kann. Für größere Flüssigkeitsvolumina kann die erfindungsgemäße Lösung als Durchflußsystem ausgebildet sein. Die zu behandelnde Flüssigkeit wird dabei vorzugsweise quer zur Ionenbewegung durch das elektrische Feld und das magnetische Feld dem Wirkungsbereich dieser Felder zugeführt und fließt über die Entnahmestellen in den lokalen Zonen der unterschiedlichen Ionenkonzentration und -polarität ab. Damit wird die erfindungsgemäße Anordnung auch zur wirtschaftlichen Behandlung größerer Flüssigkeitsmengen (z.B. Abwasserbehandlung) verwendbar, wobei gleichzeitig die Flüssigkeit geringer Salzkonzentration (gereinigte Flüssigkeit) und die polaritätsabhängigen ionenangereicherten Flüssigkeitsanteile im Durchflußverfahren entnehmbar sind. Die letztgenannten Anteile können zur Ionenrekombination vorteilhafterweise wieder zusammengeführt und erneut der erfindungsgemäßen Feldeinwirkung mit Ionenbewegung und -trennung in dem gleichen oder einem anderen Durchflußsystem (Kreislauf- oder Kaskadensystem) ausgesetzt werden. Das Ergebnis einer solchen Stufenbehandlung der Flüssigkeit ist eine weitere Konzentrationserhöhung der Flüssigkeit in den entsprechenden lokalen Zonen bis zur möglichen Salzabscheidung (Rohstoffgewinnung) und eine weitere Abspaltung niedrigkonzentrierter Flüssigkeitsanteile (gereinigte bzw. entsalzte Flüssigkeit). Die Erhöhung bzw. Verringerung der Salzkonzentrationen in den Flüssigkeitszonen erfolgt dabei auch für größere zu behandelnde Flüssigkeitsmengen mit einem Minimum an Energieaufwand und ohne Belastung der Umwelt, d.h. durch Anwendung der Erfindung ist insbesondere ein wirtschaftlich günstiges und umweltfreundliches Verfahren zur gleichzeitigen Rohstoffgewinnung und Flüssigkeitsreinigung (Abwasserbehandlung) möglich.

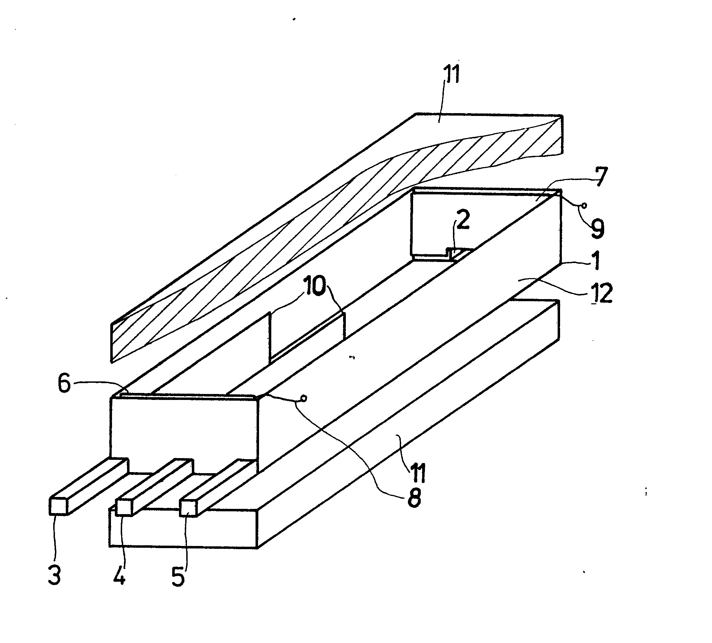

Die Erfindung soll nachstehend anhand eines in der Zeichnung dargestellten Ausführungsbeispiels näher erläutert werden.

In der Zeichnung ist die erfindungsgemäße Anordnung zur Veränderung der Salzkonzentration einer zu behandelnden Flüssigkeit als Durchflußsystem dargestellt. Zu diesem Zweck besitzt ein Durchflußgefäß 1 einen Zufluß 2 sowie drei Abflüsse 3, 4, 5 für die Flüssigkeit. An den Gefäßwänden des Zuflusses 2 und der Abflüsse 3, 4, 5 vom Durchflußgefäß 1 sind zwei Elektroden 6, 7 mit jeweils einem Anschluß 8 bzw. 9 für eine in der Zeichnung nicht dargestellte Spannungsquelle angeordnet. Im Ausflußgebiet des Durchflußgefäßes 1 befinden sich in Flußrichtung der zu behandelnden Flüssigkeit zwei Strömungsleitflächen 10. Sowohl unter als auch über dem Durchflußgefäß ist jeweils ein Permanentmagnet 11 angebracht.

Durch den Zufluß 2 strömt die zu behandelnde Flüssigkeit in das Durchflußgefäß 1 ein, wo sie gleichzeitig der Einwirkung eines mittels der Elektroden 6, 7 erzeugten stationären elektrischen Feldes und eines magnetischen Feldes der Permanentmagneten 11 unterzogen wird. Infolge dieser gleichzeitigen Feldeinwirkungen wird in der Flüssigkeit eine Ionenbewegung hervorgerufen, die durch das magnetische und elektrische Feld auf zwei längsseitige Gefäßwände 12, 13 gerichtet ist. Durch die Formgebung des Durchflußgefäßes 1 wird eine Flüssigkeitsbewegung in Richtung dieser Ionenbewegung weitestgehend vermieden. Dabei wirken die Gefäßwände 12, 13, in der Richtung der Ionenbewegung als strömungshemmend. Der Effekt der Strömungshemmung kann noch verstärkt werden, wenn in dem Durchflußgefäß 1 zusätzliche und nicht in der Zeichnung dargestellte Strömungsbarrieren angeordnet sind, die eine Flüssigkeitsbewegung vom Zufluß 2 zu den Abflüssen 3, 4, 5 nicht beeinträchtigen, aber eine Flüssigkeitsbewegung in Richtung der Ionenbewegung weiter hemmen. Dabei darf jedoch die Ionenbewegung selbst nicht beeinträchtigt werden. Infolge der konstruktiven Ausgestaltung der Anordnung als Durchflußsystem wird ohnehin durch die Strömung eine unerwünschte Flüssigkeitsbewegung quer zur Flußrichtung unterdrückt, so daß, wie die Praxis zeigt, bei der in der Zeichnung dargestellten speziellen Ausführungsform der erfindungsgemäßen Anordnung die Gefäßwände 12, 13 als Strömungsbarrieren ausreichend und zusätzliche Strömungsbarrieren nicht unbedingt erforderlich sind.

Die gezielte Ionenbewegung aufgrund der Feldereinwirkung bewirkt eine Ionenverlagerung in der Flüssigkeit, so daß sich quer zur Flußrichtung drei Zonen unterschiedlicher Ionenkonzentration und -polarität herausbilden. In den äußeren Zonen ist jeweils die Flüssigkeit mit erhöhter Ionenkonzentration entsprechender Polarität je nach Ionenbewegungsrichtung angereichert. In der mittleren Zone ist eine geringere Ionenkonzentration vorhanden. Dadurch, daß die Ionenbewegung gezielt gegenüber der Flüssigkeitsbewegung erfolgt, wird eine Rekombination der bewegten Ionen verhindert. Die Strömungsleitflächen verhindern gleichermaßen eine Ionenrekombination durch an den Abflüssen 3, 4, 5 infolge des Flüssigkeitsstaus auftretenden Turbulenzen. Aus dem Abfluß 4 ist die Flüssigkeit mit geringer Ionenkonzentration entnehmbar, was einer Flüssigkeitsreinigung (Salzabreicherung) entspricht. Aus den Abflüssen 3 und 5 ist jeweils die Flüssigkeit mit der polaritätsabhängigen hohen Ionenkonzentration (Salzanreicherung) entnehmbar. Es ist möglich, die gereinigte Flüssigkeit aus dem Abfluß 4 zur weiteren Aufbereitung (weitere Entsalzung) erneut demselben oder einem anderen Durchflußsystem zuzuführen und erneut auf die erfindungsgemäße Weise zu behandeln. Gleichermaßen ist es möglich, die Flüssigkeitsanteile aus den Abflüssen 3 und 5 zusammenzuführen und ebenfalls erneut erfindungsgemäß aufzubereiten

- 8 -

(weitere Erhöhung der Salzkonzentration bis zur Salzabscheidung). Dabei ist es zweckmäßig, bei der Zusammenführung der Abflüsse 3 und 5 die entstehende Reaktionswärme als thermische Energie zurückzugewinnen.

Das Zusammenführungsgefäß sollte deshalb z.B. vorteilhafterweise im thermischen Kontakt zum Durchflußgefäß stehen. Die erfindungsgemäße Anordnung bietet somit die Möglichkeit, sehr energiesparend und wirtschaftlich gleichzeitig eine Salzab- und -anreicherung bis zur Wasseraufbereitung und Rohstoffgewinnung durchzuführen. Die Permanentmagneten 11 können auch durch Elektromagneten zur Erzeugung eines stationären Feldes ersetzt werden.

Die Anwendbarkeit der Erfindung ist nicht nur auf Durchflußsysteme und auf die konstruktive Gefäßform des Ausführungsbeispiels beschränkt.

- 1 -

Patentansprüche:

1. Anordnung zur Veränderung der Salzkonzentration von Flüssigkeiten, gekennzeichnet dadurch, daß die Flüssigkeit gleichzeitig und gleichräumig einem stationären magnetischen und einem stationären elektrischen Feld ungleicher Feldlinienrichtungen ausgesetzt ist und daß in der Flüssigkeit Strömungsbarrieren gegen die Bewegungsrichtung der Ionen angeordnet sind.

2. Anordnung nach Anspruch 1, gekennzeichnet dadurch, daß die Komponenten der Richtungen der Vektoren des magnetischen und elektrischen Feldes senkrecht aufeinander stehen.

3. Anordnung nach Anspruch 1, gekennzeichnet durch einen Zufluß der zu behandelnden Flüssigkeit, vorzugsweise in einem Volumenbereich der Flüssigkeit, welcher der Wirkung des elektrischen und des magnetischen Feldes ausgesetzt ist, wobei der Zufluß in einer von der durch die Einwirkung des magnetischen und des elektrischen Feldes hervorgerufenen Bewegungsrichtung der Ionen der Flüssigkeit abweichenden Richtung erfolgt, sowie durch voneinander getrennte Abflüsse in den jeweils unterschiedlichen Konzentrations- und unterschiedlichen Ionenpolaritätsbereichen der Flüssigkeit.

4. Anordnung nach Anspruch 3, gekennzeichnet dadurch, daß die getrennten Abflüsse aus den unterschiedlichen Ionenpolaritätsbereichen der Flüssigkeit in einem Gefäß zusammengeführt sind, das vorzugsweise im thermischen Kontakt zu der zu behandelnden Flüssigkeit steht.

5. Anordnung nach Anspruch 3, gekennzeichnet dadurch, daß jeweils einer oder mehrere Abflüsse aus einem der Konzentrationsbereiche der Flüssigkeit erneut ein- oder mehrfach jeweils demselben oder jeweils einem anderen elektrischen und magnetischen Feld gemäß Anspruch 1 ausgesetzt sind.

**Europäisches Patentamt**

**EUROPÄISCHER RECHERCHENBERICHT**

Nummer der Anmeldung

EP 82 81 0215

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-2 063 605 (B. CHABANIER et al.) <br> * Insgesamt * <br><br> --- | 1-5 | C 02 F 1/48 |
| A | DE-A-1 811 114 (R. KOCH) <br> * Seite 7; Figur 1 * <br><br> --- | 1-4 | |
| A | DE-A-2 757 383 (A. KLASSERT) <br> * Seiten 21-22 * <br><br> ----- | 1 | |

| | RECHERCHIERTE SACHGEBIETE (Int. Cl. 3) |
|---|---|
| | C 02 F |

Der vorliegende Recherchenbericht wurde für alle Patentansprüche erstellt.

| Recherchenort | Abschlußdatum der Recherche | Prüfer |
|---|---|---|
| DEN HAAG | 17-08-1982 | VAN AKOLEYEN H.T.M. |